# EUROPEAN PATENT SPECIFICATION

(11) **EP 3 871 850 B1**
(45) Date of publication and mention of the grant of the patent: **25.10.2023**
(21) Application number: 21159578.0
(22) Date of filing: 26.02.2021
(51) Int. Cl.: B28B 19/00, B05B 3/10, F27D 1/16, F16L 55/18, B05B 3/00, B05B 7/08, C04B 28/02, B05B 13/06, F16L 55/1645, F16L 58/06, B29C 44/14, B05C 7/02

(54) **SPIN CASTING METHOD**
VERFAHREN ZUM SCHLEUDERGIESSEN
PROCÉDÉ DE MOULAGE PAR CENTRIFUGATION

(30) Priority: 29.02.2020 US 202062983596 P; 18.02.2021 US 202117178726
(43) Date of publication of application: 01.09.2021
(73) Proprietor: HarbisonWalker International, Inc., Moon Township, PA 15108 (US)
(72) Inventor: ABRINO, Donald, Curwensville, PA 16833 (US); GRAHAM, Duane, McMurray, PA 15317 (US); SAYRE, Joshua, Pittsburgh, PA 15218 (US)
(74) Representative: Banzer, Hans-Jörg

(56) References cited:
- WO-A1-2012/109289
- FR-A1- 2 607 729
- GB-A- 2 098 264
- KR-B1- 101 950 690
- US-A- 2 087 627
- US-A- 5 092 265
- US-A- 5 156 336
- US-A1- 2004 238 800

## Description

### Field of the Invention

The present invention relates generally to spin casting methods for depositing a surfacing material on a surface and, more particularly, to a method for integrating an activator with the surfacing material prior to deposition of the surfacing material on the surface.

### Background of the Invention

Spin casting (also referred to as centrifugal casting) has been used in the repair of culverts and for installation of a surfacing material, such as concrete layers, inside a pipe or other tubular-shaped structure. Spin casting is based on pumping a fine grain concrete-type mix to a head that is spinning at high speed. The head, using centrifugal force, projects the concrete outward and toward the surface of the pipe to be coated. A head of the spin caster is centered within the pipe to be coated and the head is driven by a motor, normally pneumatic or electric. As the layer of concrete builds up, the spin caster is moved down the pipe, thereby depositing a consistent layer of concrete that repairs/coats the inside surface of the pipe.

WO 2012/109289 A1 discloses a spin caster for spraying a surfacing material upon an interior surface of a vessel, which comprises a spin head configured to rotate about an axis, the spin head including an input port, and a supply line coupled to the input port and configured to convey a first material and a second material to the spin head. The supply line comprises a first channel configured to convey the first material to the spin head and a second, different channel configured to convey the second material to the spin head.

GB 2 098 264 A discloses a method for spin casting refractory concrete via a spin caster having a spin head according to the preamble of claim 1.

While spin casting is widely used, it is limited to a rather thin thickness of concrete per pass, e.g., less than 5.08 cm (2 inches) thick per pass. For thicknesses greater than 5.08 cm (2 inches) the concrete may fall from overhead portion of the pipe or the weight of the concrete may cause it to flow downward. To address this problem, concrete manufactures provide rapid setting concrete formulations. However, such rapid setting formulations can increase the likelihood that the pumped material stiffens or hardens in the transport pipes and hoses between the pump and the spin caster, particularly, if there is an installation delay. This can cause plugging of the transport lines, requiring the process to be discontinued and all lines removed and cleaned or replaced, which can increase cost and time.

In view of the above limitations, for linings thicker than 5.08 cm (2 inches) multiple passes are made. For example, a first layer may be deposited and allowed to cure (often 12 or more hours), and then a second pass is made depositing an additional layer. This process can be repeated to achieve the desired thickness. As will be appreciated, such multiple passes substantially increase the time required to achieve the desired thickness and thus is reduces efficiency.

### Summary of the Invention

According to the invention, a spin casting method as defined in claim 1 is provided. The dependent claims define preferred and/or advantageous embodiments of the invention. Aspects of the invention are directed to methods for delivering an activator comprising a foaming agent to a hardenable material being a wet mix of refractory concrete prior to the hardenable material being deposited on a surface. More specifically, the activator is delivered to the hardenable material as the hardenable material is expelled from an aperture of an applicator to a spin head that casts the hardenable material onto a target surface. Mixing of the activator with the hardenable material occurs in an air space between the applicator and the spin head and during application itself.

An advantage of the invention is that since the activator is added as the hardenable material is being expelled, the likelihood of plugging of transport lines and delivery tubes that provide the hardenable material to the applicator is significantly reduced.

According to the invention, a method for spin casting refractory concrete via a spin caster having a spin head is provided, the refractory concrete including a wet mix and separate activator that is applied to the wet mix, the method including: transmitting both the wet mix and the activator to the spin head through separate channels; and applying the activator to the wet mix at the spin head. The activator comprises a foaming agent, and the method further includes adding an air-entraining additive to the foaming agent.

In one embodiment, transmitting through separate channels comprises transmitting the wet mix through a first channel and transmitting the activator through a second channel, the second channel arranged inside the first channel.

In one embodiment, the second channel is arranged on an inner wall of the first channel.

In one embodiment, transmitting through separate channels comprises transmitting the wet mix through a first channel and transmitting the activator through a second channel, the second channel arranged on an outside surface of the first channel.

In one embodiment, transmitting through separate channels comprises transmitting both the wet mix and the activator to the spin head through a double-wall tube defining a first and second channels, wherein the wet mix is transmitted through the first channel and the activator is transmitted through the second channel.

In one embodiment, the activators comprise at least one of hydrated lime, alkali chlorides, alkali silicates, alkali phosphates, hydroxyethylcellulose, lithium accelerators, lithium sulfate, lithium carbonate, lithium citrate, lithium fluoride.

In one embodiment, the foaming agent comprises at least one of a foaming additives in a range of 0.1 wt% to 3.0 wt%.

In one embodiment, the foaming agent comprises at least one of alkylbenzene sulfonates, alkene sulfonates, and hydroxylalkane sulfates.

In one embodiment, the air-entraining additive comprises at least one of methylcellulose, methylhydroxypropylcellulose or hydroxyethylcellulose.

Examples of the specific embodiments are illustrated in the accompanying drawings. While the invention will be described in conjunction with these specific embodiments, it will be understood that it is not intended to limit the invention to such specific embodiments. On the contrary, it is intended to cover alternatives, modifications, and equivalents as may be included within the scope of the invention. In the following description, numerous specific details are set forth in order to provide a thorough understanding of the present invention. The present invention may be practiced without some or all of these specific details. In other instances, well-known process operations have not been described in details so as to not unnecessarily obscure the present invention.

These and other advantages will become apparent from the following description of a preferred embodiment taken together with the accompanying drawings and the appended claims.

### Brief Description of the Drawings

The invention may take physical form in certain parts and arrangement of parts, a preferred embodiment of which will be described in detail in the specification and illustrated in the accompanying drawings which form a part hereof, and wherein:
FIG. 1 is an illustration of a conventional spin casting device having an applicator and spin head as described in the prior art..
FIG. 2 is an illustration of a spin casting device including a circular tube for delivering activator to wet mix as it is expelled from the spin head, which may be used for carrying out the spin casting method of the invention.
FIG. 3 is an illustration of another spin casting device including an applicator having a double walled tube extending through the motor, which may be used for carrying out the spin casting method of the invention.
FIG. 4A is an illustration of a spin casting device with a spin head having a double walled spin head aperture that allows for simultaneous expulsion of wet mix and activator in accordance with the spin casting device of Fig. 3.
FIG. 4B is an illustration of a spin casting device of Fig. 4A with a spin head having a double walled spin head aperture that allows for simultaneous expulsion of wet mix and activator, in which various components of the spin head have been removed or truncated to show the spin head aperture.
FIG. 5 is an illustration of a spin casting device and system including a spin head having a double walled spin head aperture that allows for simultaneous expulsion of wet mix and activator and a rotatable sleeve fixedly attached a bottom spin head plate, which may be used for carrying out the spin casting method of the invention.
FIG. 6 is a detailed illustration of a spin head having a double walled spin head aperture that allows for simultaneous expulsion of wet mix and activator and a rotatable sleeve, which may be used for carrying out the spin casting method of the invention.
FIGS 7A-7D illustrate different examples of a delivery tube for a spin casting device , which may be used for carrying out the spin casting method of the invention.

### Detailed Description of Preferred Embodiment

Various aspects now will be described more fully hereinafter. Such aspects may, however, be embodied in many different forms and should not be construed as limited to the embodiments set forth herein; rather, these embodiments are provided so that this disclosure will be thorough and complete, and will fully convey its scope to those skilled in the art.

Where a range of values is provided, it is intended that each intervening value between the upper and lower limit of that range and any other stated or intervening value in that stated range is encompassed within the disclosure. For example, if a range of 1 mm to 8 mm is stated, 2 mm, 3 mm, 4 mm, 5 mm, 6 mm, and 7 mm are also intended to be explicitly disclosed, as well as the range of values greater than or equal to 1 mm and the range of values less than or equal to 8 mm.

All percentages, parts and ratios are based upon the total weight of the topical compositions and all measurements made are at about 25 °C, unless otherwise specified.

The singular forms "a," "an," and "the" include plural referents unless the context clearly dictates otherwise. Thus, for example, reference to a "polymer" includes a single polymer as well as two or more of the same or different polymers; reference to an "excipient" includes a single excipient as well as two or more of the same or different excipients, and the like.

The word "about" when immediately preceding a numerical value means a range of plus or minus 10% of that value, e.g., "about 50" means 45 to 55, "about 25,000" means 22,500 to 27,500, etc., unless the context of the disclosure indicates otherwise, or is inconsistent with such an interpretation. For example, in a list of numerical values such as "about 49, about 50, about 55, "about 50" means a range extending to less than half the interval(s) between the preceding and subsequent values, e.g., more than 49.5 to less than 52.5. Furthermore, the phrases "less than about" a value or "greater than about" a value should be understood in view of the definition of the term "about" provided herein.

As used herein, the term "refractory materials" refers to inorganic nonmetal materials that are utilized in various high-temperature equipment, e.g., steel production and the like. Refractory materials are characterized by a high melting point, and when exposed to high temperatures they do not lose their strength and of form.

Spin casting is used for the installation of cement-bonded or other bonding systems such as phosphate, silicate, colloidal oxides and others as is often used. In certain applications, it is desirable for concrete or refractory materials expelled by the spin caster to provide a thick lining, e.g., greater than 5.08 cm (2 inches), inside a culvert, duct, pipe or other circular vessel like a steel ladle or rotary kiln. In both concrete and refractory concrete, long setting formulations allow for long working time and are very forgiving to delays. Such long-setting formulations, however, require multiple passes with lengthy delays between passes to allow the concrete or refractory material to set before another layer is deposited.

Various embodiments of the invention are directed to methods for centrifugally casting hardenable materials being refractory concrete materials onto the inside of conduits, pipes, and circular vessels. In such embodiments, an activator is delivered to a hardenable material as it is expelled from an aperture of an applicator to a spin head that casts the hardenable material onto the target conduit, pipe, or circular vessel. Mixing of the activator with the hardenable material occurs in the air space between the applicator and the spin head and during application itself, reducing the likelihood of plugging of the transport lines and delivery tubes in the applicator.

Delivery of the activator can be carried out by various means. For example, in some embodiments, the activator may be delivered to the aperture by a spray ring larger than the spinhead that sprays the activator 360 degrees around the spin head. In other embodiments, one or more delivery tubes inside the hardenable material delivery tube carries the activator to the aperture, and in still other embodiments, an additive delivery tube may be affixed to the delivery tube that expels activator at the aperture. The addition of activator allows for rapid gelling and hardening of the hardenable materials after expulsion from the applicator, thereby allowing for thicker linings to be produced without layering.

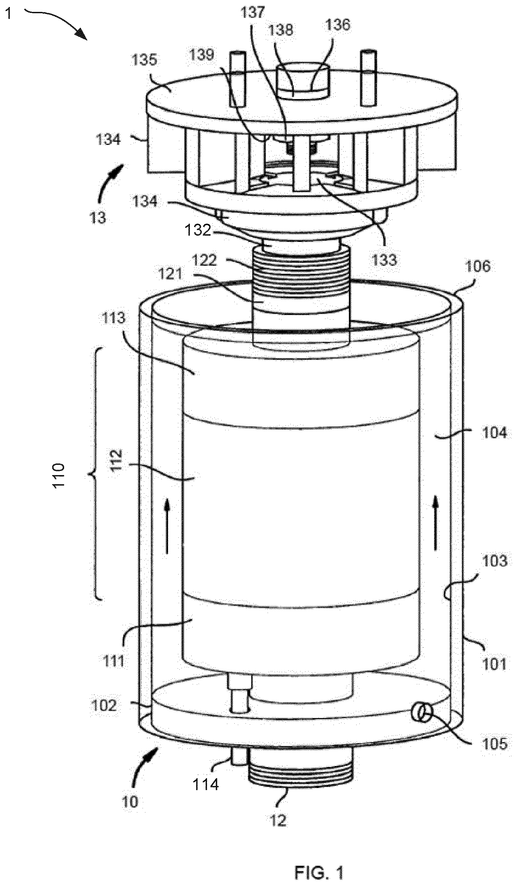

FIG. 1 is an example of a conventional centrifugal casting device 1. The casting device 1 includes an applicator 10 and a spin head 13. The applicator 10 may include a motor 110 that facilitates rotation of the spin head 13. The motor 110 may be contained within a housing 101, which may include a support base 102 that holds the motor 110 within the housing 101. The housing 101 will generally include an inner wall 103 that defines a passageway 104 through which air passes from an opening 105, which may be near the support base 102, to the opposing end 106 of the housing 101 in the direction shown by the arrows in the passageway 104. The housing 101 is shown as substantially cylindrically but can be any shape or configuration so as to provide a means for permitting the passage of air to cool the motor 110 during operation.

The motor 110 may include an exhaust cap 111, a rotational base 112, and an end cap 113. The rotational base 112 may rotate about the stationary exhaust cap 111, providing rotation that is transferred through the end cap 113 to the spin head 13. In some embodiments, an air fitting 114 may extend through the support base 102 and fits into the exhaust cap 111 to provide a supply of air to the motor 110.

A delivery tube 12 may extend through the length of applicator 10, providing a means for transferring hardenable material to the spin head 13 where it can be applied to a target surface. The delivery tube 12 may terminate at a head tube 121 that rotates together with the rotational base 112 and end cap 113. The head tube 121 may include an exterior threaded portion 122 or an interior threaded portion (not shown) that provides a means for fastening to spinner head 13 to the applicator 10.

The spin head 13 may include a spin head base 132 operably connected to a spin head connector 131, which may include threads can be operably attached to the threaded portions of the head tube 121. A spin head aperture 133 that is operably coupled to the spin head connector 131 may be positioned in the spin head base 132 and allow the hardenable material to be expelled from the device 1. Vanes 134 may be connected to spin head base 132 and a spin head top plate 135. An interior 139 of spin head top plate 135 may direct hardenable material toward the vanes 134. A spinner head nut 136 may engage spinner head bolt 137, which is adjacent to spinner head washer 138 and permit adjustment of the flow characteristics of the hardenable material flowing during operation of the device 1.

During operation of the device 1, wet hardenable material mix is pumped through the delivery tube 12 and the motor 101 to head tube 121 and spin head connector 131. The hardenable material then passes through spin head aperture 133 where the wet mix engages interior 139 of the spin head top plate 135. The interior spin head top plate deflects the wet mix outward toward the vanes 134. The spin head 13 rotates during operation whereby the vanes 134 spray a coating of wet mix radially outward.

In accordance with the invention, an activator is injected at or near the spin head aperture 133 as the wet mix enters the head of the spin caster, and the spin head mixes the activator into the wet mix. The activator may be a liquid or an aqueous suspension that is pushed into the material with air causing the concrete to begin to set or gel very quickly, allowing build-up of a thick layer of cast material on the substrate, even when the wet mix is applied The activator may include hydrated lime, alkali chlorides, alkali silicates, alkali phosphates, hydroxyethylcellulose, lithium accelerators, lithium sulfate, lithium carbonate, lithium citrate, lithium fluoride. The activator includes a foaming agent that facilitates the formation of foam, and an air-entraining additive is added to the foaming agent. The foaming agent may be a surfactant or a blowing agent. Exemplary foaming agents include alkylbenzene sulfonates, alkene sulfonates, and hydroxylalkane sulfates. The foaming agent can include a foaming additive in a range of 0.1 wt% to 3.0 wt%.

In some embodiments, sprayers may be attached to the applicator and directed toward the spin head. The sprayers may deliver the activator to the wet mix as it is expelled from the spin head aperture, allowing mixing of the activator with the wet mix.

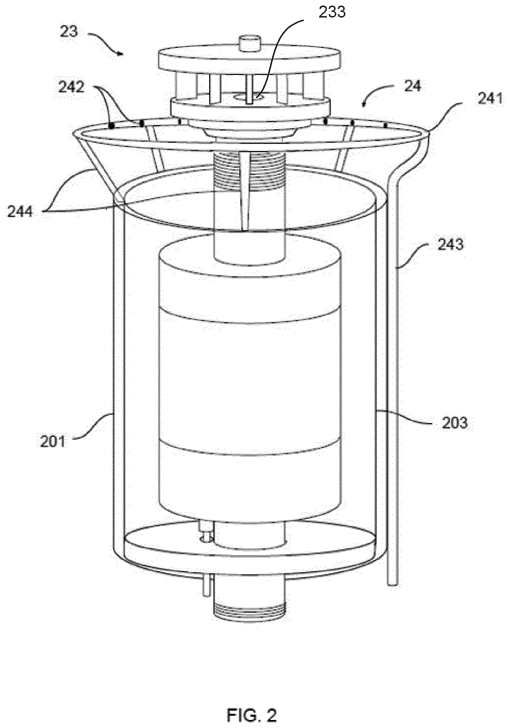

The type and arrangement of sprayer can vary among embodiments. For example, the sprayer may be individual sprayers or the sprayer can be combined into a spray apparatus such as a spray ring 24 illustrated in FIG. 2. In these examples, the spray ring 24 may be a circular tube 241 containing a number of apertures 242 that allow the activator to be expelled on to the spin head 23 and wet mix being expelled from the spin head aperture 233. In some embodiments, the spray ring 241 may be larger than the spin head 23 and capable of spraying activator 360 degrees around the spin head. Activator may be delivered to the spray ring 241 by one or more activator delivery tubes 243 that can run along the outside of the applicator housing 201 or along the inner surface 203 of the applicator housing 201. The spray ring 24 may be attached to the applicator housing 201 by a number of struts 244 that are attached to the spray ring 241 and the applicator housing 201. The connections can be facilitated by any means including, for example, welds, fasteners, glues, and the like or combinations thereof. In some embodiments, the spray ring 24 may further include nozzles operably connected to the spray ring apertures 241. Such nozzles may atomize the activator creating a fine mist of activator. In some embodiments, sprayer type activator delivery apparatuses may be retro-fitted to existing applicators.

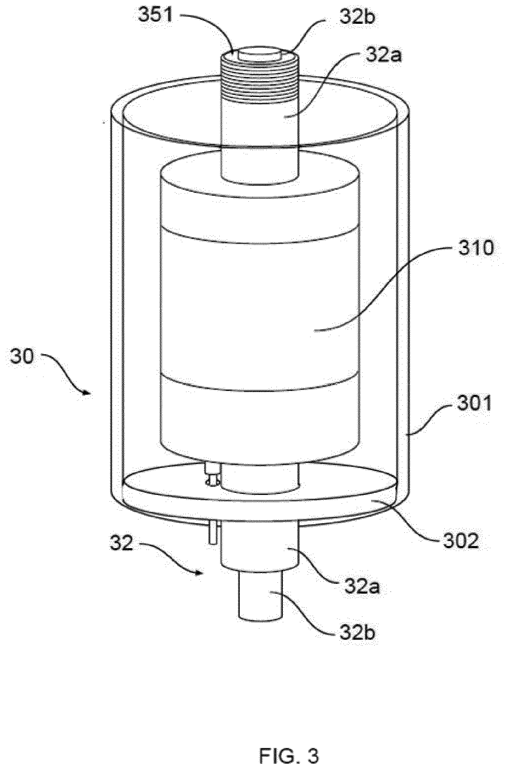

In some embodiments, the activator may be transported through the applicator 30 with the wet mix. For example, as illustrated in FIG. 3, the delivery tube 32 may include an inner delivery tube 32a and an outer delivery tube 32b surrounding the inner delivery tube 32a, the tubes 32a and 32b preferably concentric with each other. The arrangement of the inner delivery tube 32a and the outer delivery tube 32b provides a gap 351 between the tubes, e.g., about 0.8 mm (1/32 inch) to about 6.35 mm (1/4 inch) about the circumference of the inner delivery tube 32a. As will be appreciated, the size of the gap can vary depending on the requirements of the specific application. In some embodiments, tabs may be affixed to an outer surface of the inner delivery tube to keep it centered within the outer delivery tube 32b. In embodiments such as those illustrated in FIG. 3, the motor 310, housing 301, support base 302, and associated components may be arranged in substantially the same way as described above with reference to FIG. 1.

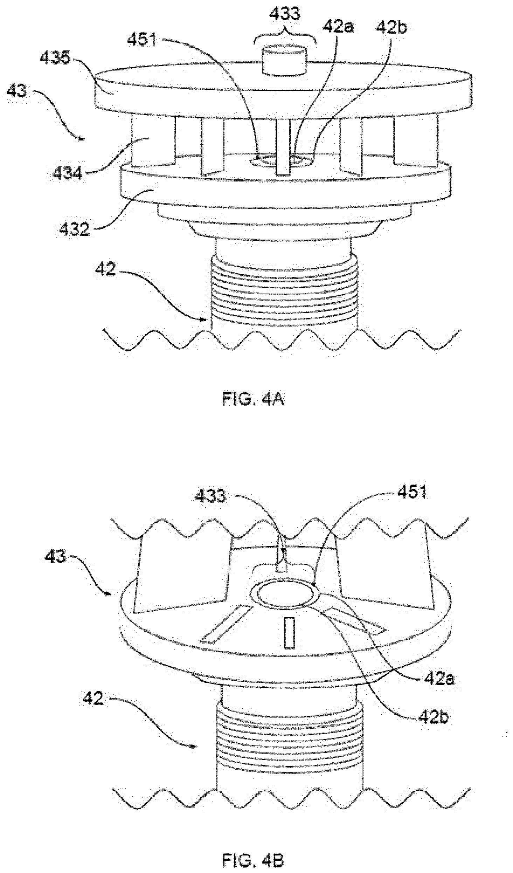

FIGS. 4A and 4B shows the spin head 43 featuring a delivery tube 42 having an inner delivery tube 42a and an outer delivery tube 42b. The inner delivery tube 42a and the outer delivery tube 42b may terminate at the same or nearly the same point at the spin head 43, creating a spin head aperture. The activator is pumped into the gap 451 between the inner delivery tube 42a and an outer delivery tube 42b. In some embodiments, air can be pumped into the gap 451 to push the activator through the delivery tube and create a spray upon expulsion from the delivery tube 42b, producing uniform delivery of the activator to the wet mix.

FIG. 4A shows a spin head 43 featuring substantially all of the components illustrated in FIG. 1, including a spin head base 432, spin head top plate 435, and vanes 434. The spin head aperture 433 includes an inner delivery tube 42a and an outer delivery tube 42b and a gap 451 between the two. The gap 451 allows the wet mix to be expelled into the spin head 43 from the inner delivery tube 42a and the activator to be expelled into the spin head 43 from the gap 421 between the inner delivery tube 42a and an outer delivery tube 42b.

FIG.4B is a cutaway drawing of the spin head 43 in which the spin head top plate 435 (as illustrated in FIG. 4A) and vanes 434 have been removed or truncated. As in FIG. 4A, the spin head aperture 433 includes an inner delivery tube 42a and an outer delivery tube 42b and a gap 451 between the two. Wet mix to be expelled into the spin head from the inner delivery tube 42a and activator to be expelled into the spin head from the gap 421 between the inner delivery tube 42a and an outer delivery tube 42b.

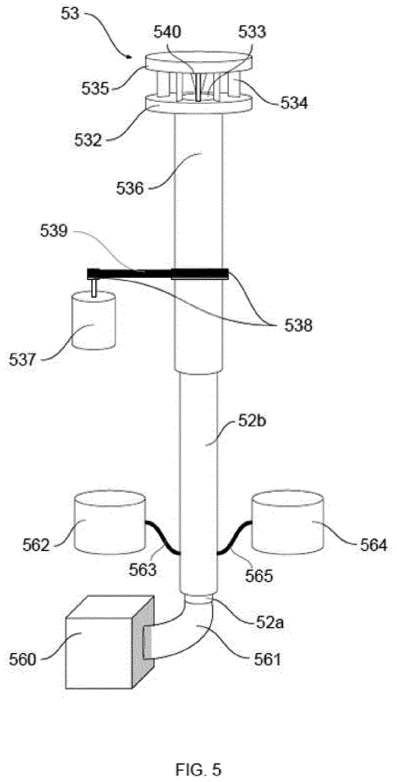

FIG. 5 is another example of a spin casting device. In some embodiments, the spin head 53 may include a rotatable sleeve 536 fixedly attached to a bottom spin head plate 532. The rotatable sleeve 536 covers at least a portion of an inner delivery tube 52a and an outer delivery tube 52b, and can rotate causing the remainder to the spin head to rotate while the inner delivery tube 52a and the outer delivery tube 52b remain stationary. Such embodiments may further include a motor 537, gearing 538, and a chain or belt 539 operably connected to the gearing 538 and motor 537 to transfer rotation from the motor 537 to the rotatable sleeve 536. The spin head 53 may include a spin head base 532, spin head top plate 535, vanes 534, and a spin head aperture 533. The spin head 53 in FIG. 5 further includes a deflection device 540, such as a cone or the like, attached to the top plate 535. The deflection device is operative to deflect materials expelled from the inner delivery tube 52a and the outer delivery tube 52b outward toward the vanes 534 where the materials are further mixed and cast toward the casting surface. While the deflection device 540 is illustrated as a cone, any means for deflecting the wet mix and activator toward the vanes 534 after being expelled from the spin head aperture 533 can be used as the deflection device. For example, the deflection device 540 may be a half sphere, a cube, and/or various multifaceted shapes.

In some embodiments, devices such as those described above may be part of systems that include a wet mix pump 560 that introduces wet mix into the inner delivery tube 52a and a hose or pipe 561 that transfers wet mix from the pump to 56 the device. Such systems may further include an activator pump 562 and hoses or piping 563 that transfers activator to the gap between the inner delivery tube 52a and outer delivery tube 52b, and an air pump 564 and hoses or piping 565 that transfers air into the gap between the inner delivery tube 52a and outer delivery tube 52b. A seal may be positioned between the outer delivery tube 52b and the inner delivery tube 52b near the lower terminus of the outer delivery tube to ensure activator and, in some embodiments, air are transferred toward the spin head aperture. In some embodiments, the activator pump 562 and air pump 564 may be combined into a single device, and an air and activator mixture may be pumped through a single hose or pipe. In other embodiments, the activator may be pumped into the gap between the gap between the inner delivery tube 52a and outer delivery tube 52b.

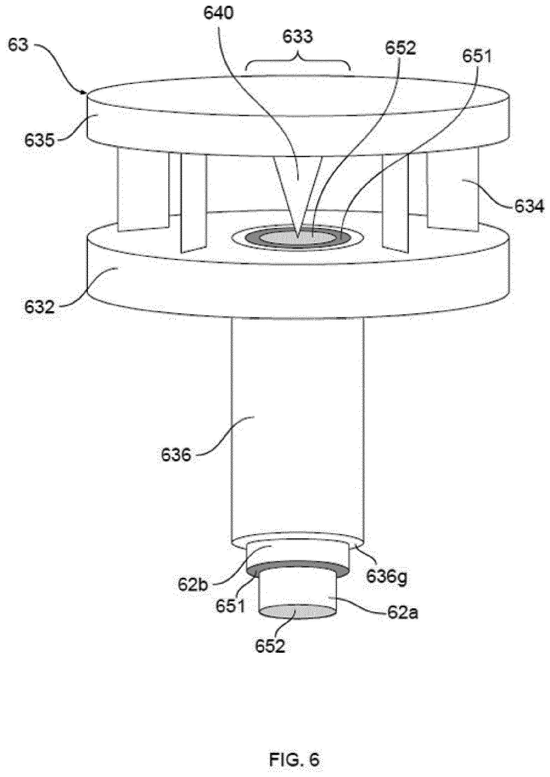

FIG. 6 is a close-up of the spin head 63 illustrated in FIG. 5. As discussed above, the spin head 63 may include a spin head base 632 spin head top plate 635, vanes 634. A rotatable sleeve 636 may be positioned to cover at least a portion of the inner delivery tube 62a and an outer delivery tube 62b, the rotatable sleeve 636 being rotatable while the inner delivery tube 62a and the outer delivery tube 62b remain stationary. FIG. 6 shows the rotatable sleeve 636 truncated to show the outer delivery tube 62b, and shows the outer delivery tube 62b truncated to show a truncated inner delivery tube 62a. A gap 636g is created between the rotatable sleeve 636 and the outer delivery tube 62b. Bearings (not pictured) can be inserted into the gap 636g between the rotatable sleeve 636 and the outer delivery tube 62b to ease rotation of the rotatable sleeve 636 relative to the outer delivery tube 62b, and to ensure the gap 636g remains consistent and does not distort as the rotatable sleeve 636 rotates. A second gap may be created between the outer delivery tube 62b and the inner delivery tube 62a creating a circular channel 651 through which activator and, in some embodiments, air is transferred to the spin head aperture 633.

The spin head aperture 633 may be composed of the opening of the circular channel 651 and the opening of the canal 652 created by the inner delivery tube. The circular channel 651 and the canal 652, therefore, allow simultaneous passage of activator and wet mix to the spin head 63 where it is expelled from the outer delivery tube 62b and the inner delivery tube 62a. A deflection cone 640 may be positioned in the spin head 63 to intercept expelled activator and wet mix cause mixing of these materials and deflect the materials toward the vanes 634. Mixing of activator and wet mix can occur within the space between the spin head base 632 and spin head top plate 635, and the area surrounding the spin head 63 as these materials are contacted by the vanes 634. In certain embodiments, the circular channel 651 may be composed of several smaller tubes positioned along an inner wall of the inner delivery tube 62a eliminating the need for the outer delivery tube 62b while affecting delivery of activator to the spin head aperture 633, or in some embodiments, such tubes may be arranged within the circular channel 651.

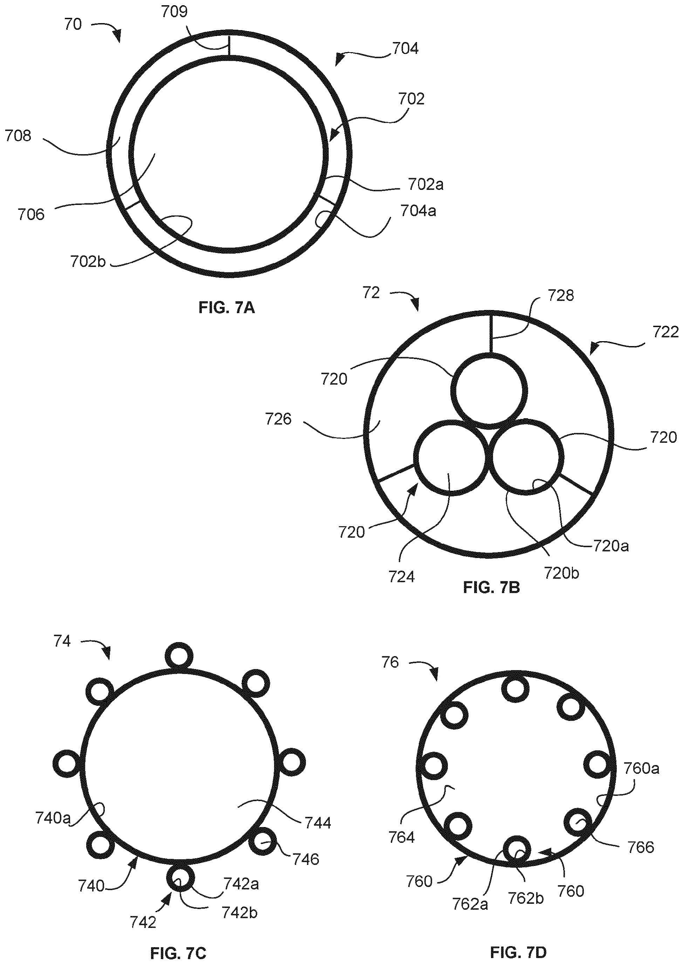

Referring to Figs. 7A-7D, several embodiments of a delivery tube are illustrated that may be used with spin caster described herein. Fig., 7A illustrates a tube-in-tube configuration 70, where a first tube 702 is arranged inside a second tube 704. Preferably, the two tubes 702, 704 are arranged concentric with each other and define a gap between the tubes. A first channel 706 is defined by inner walls 702b of the first tube 702, and a second channel 708 is defined by the region between the inner walls 704a of the second tube 704 and the outer walls 702a of the first tube 702 (i.e., the second channel is defined by the gap between tubes). In this regard, the first channel 706 is within or encompassed by the second channel 708. Spacers 709 may be fixed to the first and second tubes to maintain a positional relationship between the two tubes.

Moving to Fig. 7B, illustrated is another embodiment of a delivery tube 72 . The embodiment of Fig. 7B includes a plurality of inner tubes 720 arranged within an outer tube 722. It is noted that while three inner tubes 720 are shown, more or fewer may be implemented depending on the requirements of the application. A first channel 724 is defined by the region between the interior walls 720a of each inner tube 720 and a second channel 726 is defined by the region between the interior wall 722a of the outer tube 722 the outer walls 720b of the inner tubes 720. The inner tubes 720 may be fixed together via a fixing means, e.g., adhesive, weld, etc., and spacers 728 may be fixed between the outer tube and each inner tube to maintain a positional relationship between the two tubes.

Fig. 7C illustrates another embodiment of a delivery tube 74. The delivery tube 74 includes an inner tube 740 and a plurality of outer tubes 742 arranged circumferentially around the inner tube 740. While eight outer tubes 742 are shown, more or fewer may be implemented depending on the requirements of the application. Similarly, while the diameter of the inner tube 740 is shown to be substantially larger than a diameter of the outer tubes 742, the relationship of the diameters may vary depending on the requirements of the application. The outer surface 742a of each of the plurality of outer tubes 742 may be fixed to the outer surface 740a of the inner tube using fixing means, such as an adhesive, weld, or fastener (not shown). The region within the inner wall 740a of the inner tube 740 defines a first channel, and the region within the inner wall 742b of one or more outer tube 742 defines a second channel 746.

Fig. 7D shows a delivery tube 76 similar to that of Fig.7C, except there is a single outer tube 760 and a plurality of inter tubes 762 arranged circumferentially within the outer tube 760. In the embodiment of Fig. 7D an outer surface 762a of each inner tube 762 is fixed to an inner surface 760a the outer tube 760 using a fixing means as discussed above. The region within the inner wall 760a of the outer tube 760 that is not occupied by the inner tubes 762 defines a first channel 764, while the region within the inner wall 762b of one or more inner tubes 762 defines a second channel 766.

While the embodiments illustrated in Figs. 7A-7B are shown as circular structures, it should be appreciated that other shapes may be employed. For example, square, rectangular, oval, triangular and other shapes may be utilized to create the delivery tubes.

In various embodiments described above, activator may be a liquid or suspension that, in some embodiments, can be mixed with air or other gases in the delivery tube. The activator may be delivered as a spray that mixes with the wet mix. This may cause the wet mix to begin to set or gel very quickly, allowing build up a thick layer of material without the problems related to a rapid setting formulations that must remain uncured as it is pumped into the spin head and cures more slowly upon delivery to the coated surface. Delivering activator separately from the wet mix and mixing in the air within or surrounding the spin head allows high concentrations of the activator to be mixed into the wet mix, and rapid curing of the hardenable material upon delivery to the coated surface. Rapid curing allows for thicker layers of wet mix to be applied to the surface in a single step, reducing the time necessary to apply sufficient material and eliminating curing within the delivery tube and spin head.

Some embodiments are directed to methods for centrifugally casting a hardenable material that include the step of mixing a wet mix of the hardenable material with an activator in air in or around a spin head. In some embodiments, the activator may be pumped into the spin head, and in certain embodiments, the activator may be mixed with air or another gas before being mixed with the wet mix.

The foregoing description relates to specific embodiments of the present invention. It should be appreciated that these embodiments are described for purposes of illustration only, and that numerous alterations and modifications may be practiced by those skilled in the art without departing from the scope of the invention as defined in the appended claims

## Claims

1. A method for spin casting refractory concrete via a spin caster having a spin head (23; 43; 53; 63), the refractory concrete including a wet mix and separate activator that is applied to the wet mix, the method comprising:
transmitting both the wet mix and the activator to the spin head (23; 43; 53; 63) through separate channels (706, 708; 724, 726; 744, 746; 764, 766); and
applying the activator to the wet mix at the spin head (23; 43; 53; 63),
**characterized in that**
the activator comprises a foaming agent; and
the method further comprises adding an air-entraining additive to the foaming agent.

2. The method according to claim 1, wherein transmitting through separate channels comprises transmitting the wet mix through a first channel (764) and transmitting the activator through a second channel (766), the second channel (766) arranged inside the first channel (764).

3. The method according to claim 1, wherein transmitting through separate channels comprises transmitting the wet mix through a first channel (744) and transmitting the activator through a second channel (746), the second channel (746) arranged on an outside surface of the first channel (744).

4. The method according to claim 1, wherein transmitting through separate channels comprises transmitting both the wet mix and the activator to the spin head (43; 53; 63) through a double-wall tube (32, 32a, 32b; 42, 42a, 42b; 52a, 52b; 62a, 62b; 70; 72) defining first and second channels (706, 708; 724, 726), wherein the wet mix is transmitted through the first channel (706; 724) and the activator is transmitted through the second channel (708; 726).

5. The method according to any one of claims 1-4, wherein the air-entraining additive comprises at least one of methylcellulose, methylhydroxypropylcellulose or hydroxyethylcellulose.

6. The method according to any one of claims 1-5, wherein the foaming agent comprises at least one of a foaming additive in a range of 0.1 wt% to 3.0 wt%.

7. The method according to any one of claims 1-6, wherein the foaming agent comprises at least one of alkylbenzene sulfonates, alkene sulfonates, and hydroxylalkane sulfates.

8. The method according to claim 1-7, wherein the activator comprises at least one of hydrated lime, alkali chlorides, alkali silicates, alkali phosphates, hydroxyethylcellulose, lithium accelerators, lithium sulfate, lithium carbonate, lithium citrate, lithium fluoride.

## Patentansprüche

1. Verfahren zum Schleudergießen von feuerfestem Beton über eine Schleudergussvorrichtung, die einen Schleuderkopf (23; 43; 53; 63) aufweist, wobei der feuerfeste Beton eine Nassmischung und einen separaten Aktivator aufweist, der auf die Nassmischung angewendet wird, wobei das Verfahren umfasst:
Übertragen sowohl der Nassmischung als auch des Aktivators zu dem Schleuderkopf (23; 43; 53; 63) durch separate Kanäle (706, 708; 724, 726; 744, 746; 764, 766); und
Anwenden des Aktivators auf die Nassmischung bei dem Schleuderkopf (23; 43; 53; 63),
**dadurch gekennzeichnet, dass**
der Aktivator ein Schaummittel umfasst; und
das Verfahren ferner ein Hinzufügen eines luftporenbildenden Additivs zu dem Schaummittel umfasst.

2. Verfahren nach Anspruch 1, wobei das Übertragen durch separate Kanäle ein Übertragen der Nassmischung durch einen ersten Kanal (764) und ein Übertragen des Aktivators durch einen zweiten Kanal (766) umfasst, wobei der zweite Kanal (766) innerhalb des ersten Kanals (764) angeordnet ist.

3. Verfahren nach Anspruch 1, wobei das Übertragen durch separate Kanäle ein Übertragen der Nassmischung durch einen ersten Kanal (744) und ein Übertragen des Aktivators durch einen zweiten Kanal (746) umfasst, wobei der zweite Kanal (746) an einer Außenfläche des ersten Kanals (744) angeordnet ist.

4. Verfahren nach Anspruch 1, wobei das Übertragen durch separate Kanäle ein Übertragen sowohl der Nassmischung als auch des Aktivators zu dem Schleuderkopf (43; 53; 63) durch ein doppelwandiges Rohr (32, 32a, 32b; 42, 42a, 42b; 52a, 52b; 62a, 62b; 70; 72) umfasst, welches erste und zweite Kanäle (706, 708; 724, 726) definiert, wobei die Nassmischung durch den ersten Kanal (706; 724) übertragen wird und der Aktivator durch den zweiten Kanal (708; 726) übertragen wird.

5. Verfahren nach einem der Ansprüche 1 bis 4, wobei das luftporenbildende Additiv mindestens eines von Methylcellulose, Methylhydroxypropylcellulose oder Hydroxyethylcellulose umfasst.

6. Verfahren nach einem der Ansprüche 1 bis 5, wobei das Schaummittel mindestens ein Schaumadditiv in einem Bereich von 0,1 Gew.-% bis 3,0 Gew.-% umfasst.

7. Verfahren nach einem der Ansprüche 1 bis 6, wobei das Schaummittel mindestens eines von Alkylbenzolsulfonaten, Alkensulfonaten und Hydroxylalkansulfaten umfasst.

8. Verfahren nach Anspruch 1-7, wobei der Aktivator mindestens eines von Kalkhydrat, Alkalichloriden, Alkalisilikaten, Alkaliphosphaten, Hydroxyethylcellulose, Lithium-Beschleunigern, Lithiumsulfat, Lithiumcarbonat, Lithiumcitrat und Lithiumfluorid umfasst.

## Revendications

1. Procédé de moulage par rotation de béton réfractaire par l'intermédiaire d'un couleur à rotation ayant une tête de spin (23 ; 43 ; 53 ; 63), le béton réfractaire incluant un mélange humide et un activateur séparé qui est appliqué au mélange humide, le procédé comprenant :
la transmission à la fois du mélange humide et de l'activateur à la tête de rotation (23 ; 43 ; 53 ; 63) par des canaux indépendants (706, 708 ; 724, 726 ; 744, 746 ; 764, 766) ; et
l'application de l'activateur au mélange humide au niveau de la tête de rotation (23 ; 43 ; 53 ; 63),
**caractérisé en ce que**
l'activateur comprend un agent moussant ; et
le procédé comprend en outre l'ajout d'un additif d'entraînement d'air à l'agent moussant.

2. Procédé selon la revendication 1, dans lequel la transmission par des canaux séparés comprend la transmission du mélange humide par un premier canal (764) et la transmission de l'activateur par un second canal (766), le second canal (766) étant disposé à l'intérieur du premier canal (764).

3. Procédé selon la revendication 1, dans lequel la transmission par des canaux séparés comprend la transmission du mélange humide par un premier canal (744) et la transmission de l'activateur par un second canal (746), le second canal (746) étant disposé sur une surface externe du premier canal (744).

4. Procédé selon la revendication 1, dans lequel la transmission par des canaux séparés comprend la transmission à la fois du mélange humide et de l'activateur à la tête de rotation (43 ; 53 ; 63) par un tube à double paroi (32, 32a, 32b ; 42, 42a, 42b ; 52a, 52b ; 62a, 62b ; 70 ; 72) définissant des premier et second canaux (706, 708 ; 724, 726), dans lequel le mélange humide est transmis par le premier canal (706 ; 724) et l'activateur est transmis par le second canal (708 ; 726).

5. Procédé selon l'une quelconque des revendications 1 à 4, dans lequel l'additif d'entraînement d'air comprend au moins l'un parmi la méthylcellulose, la méthylhydroxypropylcellulose ou l'hydroxyéthylcellulose.

6. Procédé selon l'une quelconque des revendications 1 à 5, dans lequel l'agent moussant comprend au moins l'un parmi un additif moussant dans une plage de 0,1 % en poids à 3,0 % en poids.

7. Procédé selon l'une quelconque des revendications 1 à 6, dans lequel l'agent moussant comprend au moins un parmi des sulfonates d'alkylbenzène, des sulfonates d'alcènes, et des sulfates d'hydroxylalcane.

8. Procédé selon la revendication 1 à 7, dans lequel l'activateur comprend au moins une parmi la chaux hydratée, les chlorures alcalins, les silicates alcalins, les phosphates alcalins, l'hydroxyéthylcellulose, les accélérateurs de lithium, le sulfate de lithium, le carbonate de lithium, le citrate de lithium, le fluorure de lithium.
